(19) Europäisches Patentamt
European Patent Office
Office européen des brevets

(11) **EP 2 803 552 A2**

(12) **EUROPEAN PATENT APPLICATION**

(43) Date of publication:
**19.11.2014 Bulletin 2014/47**

(51) Int Cl.:
**B61L 23/04** (2006.01)    **B61L 29/30** (2006.01)

(21) Application number: **14401060.0**

(22) Date of filing: **12.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.05.2013   TW 102116892**

(71) Applicant: **China Engineering Consultants, Inc.
Taipei City 106 (TW)**

(72) Inventors:
• **The inventors have agreed to waive their entitlement to designation.**

(74) Representative: **Lang, Christian
LangPatent
Anwaltskanzlei IP Law Firm
Rosenheimer Strasse 139
81671 München (DE)**

(54) **Multi-computer-vision recognition system for level crossing obstacle**

(57)      A multi-computer vision recognition system for a level crossing obstacle is disclosed, comprising vision image systems, a position determination system, an obstacle determination resolution system and a power unit, where vision image systems which may operate all day long operate simultaneously, information of the single vision image systems is each computed by using the position determination system, and then the computed result is introduced to the obstacle determination resolution system for determination, whereby achieving an increased obstacle recognition result and a promoted obstacle recognition accuracy.

Fig. 2

## Description

Field of the invention

The present invention relates to a multi-computer vision recognition system for a level crossing obstacle, and particularly to a multi-computer vision recognition system for a level crossing obstacle, where vision image systems which may operate all day long operate simultaneously, information of the single vision image systems is each computed by using a position determination system, and then the computed result is introduced to an obstacle determination resolution system for determination, whereby achieving an increased obstacle recognition result and a promoted obstacle recognition accuracy.

Description of the Related Art

A conventional technology may be seen in TW patent TWI318187 "RAIL VEHICLE SAFETY MONITOR SYSTEM", which discloses a rail vehicle safety monitor system. This safety monitor system acquires a frame information from a monitor set every time period in a drive controlling computer, which is stored in a cross-section library according to a monitor set position and an occurring timing of every frame information. Furthermore, the frame information may be searched out based on the parameters including the monitor set position and the occurring timing, and the frame information may be transmitted to a display unit. By viewing the display unit, a driver may perceive what happens at the front side with respect to his/her car, which may simulate a driver's vision distance for enhancing a vision state. However, since the frame information for all the way is available for the driver for reference and the driver needs thus not to take any responsibility of determination, the driver will not get totally involved in a train driving task. And, now the drive controlling computer does not have the capability of recognizing and determining the frame information.

Another conventional technology may be seen in TW patent TW455553 "TRAIN SAFETY MONITOR SYSTEM AND HIGH WAY DRIVING PROMOTING SYSTEM", which discloses the technology where a micro-computer single chip is used along with a radio signal to control the information transmission regarding rail fragmentations. At a level crossing, the train will be notified with an emitted warning signal if any car is present on the level crossing when a fencing used for the level crossing is set down. When the train goes across the level crossing or any present danger, a dialing device may notify the monitor center. A camera device may monitor the level crossing state, and may emit a wireless signal to the monitor on the train at all time. However, this patent does not mention the manner and device of detection of an obstacle on the level crossing. In addition, it requires an emergency button and a remove button to be manually operated and arranged on the level crossing, and if an obstacle exists within an alarm area it has to be determined automatically.

In view of this, after years of research and development the inventor of the present invention finally sets forth "a multi-computer vision recognition system for level crossing obstacle" by which the issues encountered in the prior art may be improved.

Summary of the invention

It is, therefore, an object of the present invention to provide a detection of an obstacle on a level crossing, where vision image systems operate simultaneously, information of each of the vision image systems is computed by a position determination system, and then the computation result is introduced to the obstacle determination resolution system for determination, whereby achieving the effects of an increased obstacle recognition result and obstacle recognition accuracy.

To achieve the above mentioned object, the present invention discloses a multi-computer vision recognition system for a level crossing obstacle, comprising an odd number of and at least three vision image systems, detecting and tracking an obstacle within a monitored area on a level crossing, and outputting an obstacle information, respectively; a position determination system, connected to each of the vision image systems, capable of receiving the obstacle information detected by each of the vision image systems, converting a local area of the obstacle in the monitored area on the level crossing for each of the vision image systems, and outputting the obstacle information corresponding to the local area for each of the vision image systems; an obstacle determination resolution system, connected to the position determination system and determining if there is the obstacle within the monitored area on the level crossing according to the obstacle information corresponding to each of the local areas; and a power unit, connected to each of the vision image systems.

In an embodiment, the vision image system comprises a camera and an infrared projector.

In an embodiment, the position determination system comprises a computation mechanism and an image recognition mechanism.

In an embodiment, the image recognition mechanism adopts a correction matrix mechanism, capable of computing for the position of the obstacle and corresponding to a correct position of the overall vision recognition system to promote an obstacle recognition accuracy.

In an embodiment, the obstacle determination resolution system is further connected to an output mechanism, which outputs an output signal to an emergency button originally belonging to the level crossing.

In an embodiment, the multi-computer vision recognition system as claimed in claim 1, wherein the output mechanism comprises a loudspeaker and a display screen.

Brief descriptions of the drawings

The present invention will be better understood from the following detailed descriptions of the preferred embodiments according to the present invention, taken in conjunction with the accompanying drawings, in which:

FIG. 1 is a schematic block diagram illustrating the present invention;
FIG. 2 is a schematic diagram illustrating a use state according to the present invention; and
FIG. 3 is a schematic diagram of an image recognition state according to the present invention.

Description of the preferred embodiments

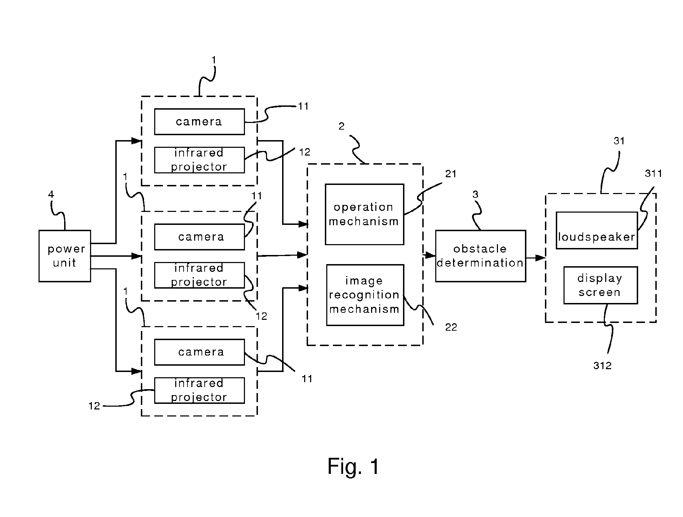

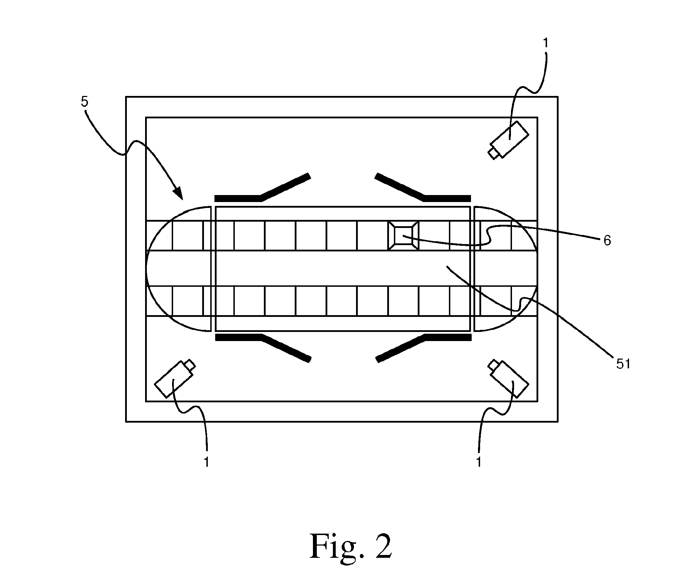

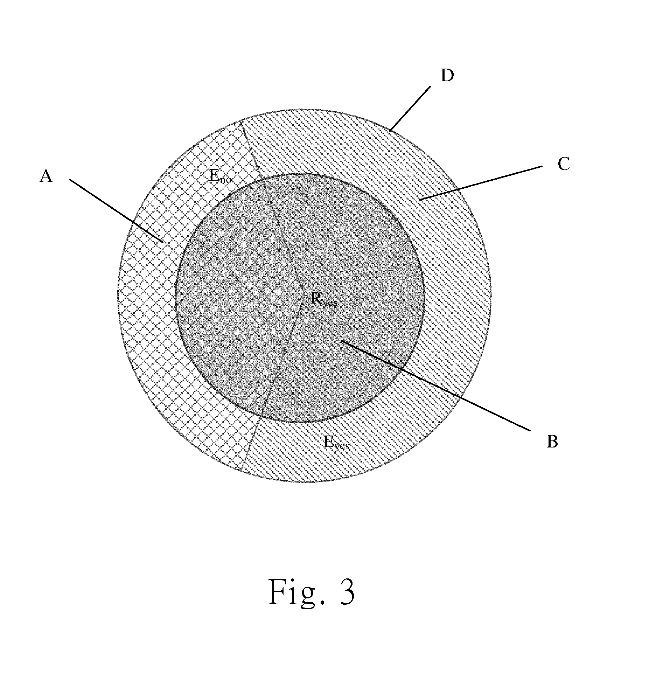

Referring to FIG. 1, FIG. 2 and FIG. 3, which are a schematic block diagram illustrating the present invention, a schematic diagram illustrating a use state according to the present invention, and FIG. 3 is a schematic diagram of an image recognition state according to the present invention. As shown, the present invention is a multi-computer vision recognition system for a level crossing obstacle. The system comprises vision image systems 1, a position determination system 2, an obstacle determination resolution system 3 and a power unit 4.

The vision image systems 1 has an odd number and at least three vision image systems, and comprises a camera 11 and an infrared projector 12, which may detect and track an obstacle 6 within a monitored area 51 on a level crossing 5, and outputting an obstacle information, respectively.

The position determination system 2 is connected to each of the vision image systems, and has an operation mechanism 21 and an image recognition mechanism 22. The position determination system 2 receives the obstacle information detected by each of the vision image systems 1 , and converts a local area of the obstacle 6 in the monitored area 51 on the level crossing 5 for each of the vision image systems 1 and outputs the obstacle information corresponding to the local area for each of the vision image systems 1. The image recognition mechanism 22 adopts a correction matrix mechanism, which may effectively compute the images detected from the obstacle, and a correct position with respect to the overall vision recognition system. In this manner, the accuracy of obstacle recognition may be promoted.

The obstacle determination resolution system 3 is connected to the position determination system 2 and determines if there is the obstacle 6 within the monitored area on the level crossing 5 according to the obstacle 6 information corresponding to each of the local areas 5. The obstacle determination resolution system 3 is further connected to an output mechanism 31, which outputs a signal to an emergency button (not shown) originally arranged on the level crossing. The output mechanism 31 comprises a horn 311 and a display screen 312.

The power unit 4 is connected to each of the vision image systems 1 for supplying a required power. As such, the above mentioned elements constitute a novel multi-computer vision recognition system for a level crossing obstacle.

When the present invention operates, the vision image systems 1 are disposed on the position of the monitor area 51 of the level crossing 5, respectively. Further, the camera 11 and the infrared projector 12 are used together to operate all day long. Moreover, images are captured from different angles with respect to the monitor area 51, and such captured images are transmitted to the position determination system 2. When an obstacle 6 is present in the monitor area 51, the position determination system 2 converts the received obstacle data into the corresponding local areas within the monitor area 51 of the level crossing 5 by using the cooperation of the computation mechanism 21 and the image recognition mechanism 22.

Afterwards, the obstacle data of each of the local areas are transmitted to the obstacle determination resolution system 3, and the determination resolution system 3 determines if any obstacle 6 exists in the monitor area 51 of the level crossing in a majority policy. If the obstacle 6 is determined as existent, the output mechanism 31 outputs an alarm signal by using a loudspeaker 311 or a display screen 312.

However, the present invention has a vision image recognition rate, which is illustrated as FIG. 3 and may be calculated as the following equation:

$$\text{E r r o r ~ r a t e:} \quad P_{false-alarm} = P(E_{no} \mid R_{yes}) = \frac{P(R_{yes} \bigcap E_{no})}{P(R_{yes})},$$

The obstacle does not exist by vision $A(E_{no})$, but the system recognizes that the obstacle exists $B(R_{yes})$.

$$\text{Accuracy:} \quad P_{precision} = 1 - P_{false-alarm} = P(E_{yes} \mid R_{yes}) = \frac{P(R_{yes} \bigcap E_{yes})}{P(R_{yes})}$$,

the obstacle exists by vision $(E_{yes})$C, and the obstacle exists as recognized by system $B(R_{yes})$.

$$\text{Recall ratio:} \quad P_{miss} = P(R_{no} \mid E_{yes}) = \frac{P(R_{no} \bigcap E_{yes})}{P(E_{yes})}$$,

the obstacle does not exist $D(R_{no})$ as recognized by system, but the obstacle exists by vision $(E_{yes})$C.

$$\text{Lose ratio:} \quad P_{recall} = 1 - P_{miss} = P(R_{yes} \mid E_{yes}) = \frac{P(R_{yes} \bigcap E_{yes})}{P(E_{yes})}$$,

the obstacle does not exist as recognized by system, but the obstacle does not exist by vision.

The multiple (2n+1) vision image systems are each a voting system based on majority policy, whose recognition rate may be obtained by using the following equation:

$$P_{false-alarm-commitee} = \sum_{i=0}^{n} C_i^{2n+1} (1 - P_{false-alarm})^i P_{false-alarm}^{2n+1-i}$$

By means of the computed recognition of the application examples, it may be known that 3-set system (n=3) and 5-set system (n=5) have their respective system recognition rates expressed as the following table. It is indicated that the multiple vision image system may effectively promote the image recognition rate up to a particular level.

$$P_{false-alarm-3} = P_{false-alarm}^2 (3 - 2P_{false-alarm})$$

$$P_{false-alarm-5} = P_{false-alarm}^5 + 5(1 - P_{false-alarm}) P_{false-alarm}^4 + 10(1 - P_{false-alarm})^2 P_{false-alarm}^3$$

$P_{false-alarm} = 6\%$     $P_{precison} = 94\%$

$P_{false-alarm-3} = 1\%$     $P_{precison-3} = 99\%$

$P_{false-alarm-5} = 0.2\%$     $P_{precison-5} = 99.8\%$

| single system accuracy (%) | 3-set system accuracy (%) | 5-set system accuracy (%) |
|---|---|---|
| 99 | 99.9702 | 99.99901 |
| 98 | 99.8816 | 99.99224 |
| 97 | 99.7354 | 99.9742 |
| 96 | 99.5328 | 99.93978 |
| 95 | 99.275 | 99.88419 |

(continued)

| single system accuracy (%) | 3-set system accuracy (%) | 5-set system accuracy (%) |
|---|---|---|
| 94 | 98.9632 | 99.80297 |
| 93 | 98.5986 | 99.69201 |
| 92 | 98.1824 | 99.54747 |
| 91 | 97.7158 | 99.36587 |
| 90 | 97.2 | 99.144 |

In addition, the multiple image recognition system adopts a mechanism correction matrix for computing for the position of the obstacle. This may accurately deduce the position where the obstacle is in each of the images, and each of the deduced positions may be used for comparison. The correction matrix formula of the images are as follows:

$$T_n^{n-1} = \begin{bmatrix} \square & \square & \square & \square \\ \square & R & \square & D \\ \square & \square & \square & \square \\ \square & P & \square & 1 \end{bmatrix}$$

The first image correction matrix:

$$T_0^1 = \begin{bmatrix} X_{x1} & Y_{x1} & Z_{x1} & D_{x1} \\ X_{y1} & Y_{y1} & Z_{y1} & D_{y1} \\ X_{z1} & Y_{z1} & Z_{z1} & D_{z1} \\ P_{x1} & P_{y1} & P_{z1} & 1 \end{bmatrix} \begin{bmatrix} x \\ y \\ z \\ 1 \end{bmatrix} = \begin{bmatrix} u_1 \\ v_1 \\ w_1 \\ 1 \end{bmatrix}$$

The second image correction matrix:

$$T_0^2 = \begin{bmatrix} X_{x2} & Y_{x2} & Z_{x2} & D_{x2} \\ X_{y2} & Y_{y2} & Z_{y2} & D_{y2} \\ X_{z2} & Y_{z2} & Z_{z2} & D_{z2} \\ P_{x2} & P_{y2} & P_{z2} & 1 \end{bmatrix} \begin{bmatrix} x \\ y \\ z \\ 1 \end{bmatrix} = \begin{bmatrix} u_2 \\ v_2 \\ w_2 \\ 1 \end{bmatrix}$$

The third image correction matrix:

$$T_0^3 = \begin{bmatrix} X_{x3} & Y_{x3} & Z_{x3} & D_{x3} \\ X_{y3} & Y_{y3} & Z_{y3} & D_{y3} \\ X_{z3} & Y_{z3} & Z_{z3} & D_{z3} \\ P_{x3} & P_{y3} & P_{z3} & 1 \end{bmatrix} \begin{bmatrix} x \\ y \\ z \\ 1 \end{bmatrix} = \begin{bmatrix} u_3 \\ v_3 \\ w_3 \\ 1 \end{bmatrix}$$

wherein

$P_{i,j(i=x,y,z),(j=1,2,3)}$: Angle factor

$R$ : Rotation matrix

$D$: Displacement vector

$$\begin{bmatrix} x \\ y \\ z \end{bmatrix} : \text{Obstacle position}$$

$$\begin{bmatrix} u_j \\ v_j \\ w_j \end{bmatrix}_{(j=1,2,3)} : \text{image position}$$

In view of the above, a multi-computer vision recognition system for a level crossing obstacle according to the present invention may effectively improve the shortcomings existing in the prior art, and applied onto obstacle detection at the level crossing, where vision image systems which may operate all day long operate simultaneously, information of the single vision image systems is each computed by using the position determination system, and then the computed result is introduced to the obstacle determination resolution system for determination, whereby achieving an increased obstacle recognition result and a promoted obstacle recognition accuracy.

From all these views, the present invention may be deemed as being more effective, practical, useful for the consumer's demand, and thus may meet with the requirements for a patent.

The above described are merely examples and preferred embodiments of the present invention, and not exemplified to intend to limit the present invention. Any modifications and changes without departing from the scope of the spirit of the present invention are deemed as within the scope of the present invention. The scope of the present invention is to be interpreted with the scope as defined in the claims.

## Claims

1. A multi-computer vision recognition system for a level crossing obstacle, comprising:

   an odd number of and at least three vision image systems, detecting and tracking an obstacle within a monitored area on a level crossing, and outputting an obstacle information, respectively;
   a position determination system, connected to each of the vision image systems, capable of receiving the obstacle information detected by each of the vision image systems, converting a local area of the obstacle in the monitored area on the level crossing for each of the vision image systems, and outputting the obstacle information corresponding to the local area for each of the vision image systems;
   an obstacle determination resolution system, connected to the position determination system and determining if there is the obstacle within the monitored area on the level crossing according to the obstacle information corresponding to each of the local areas; and
   a power unit, connected to each of the vision image systems.

2. The multi-computer vision recognition system as claimed in claim 1, wherein the vision image system comprises a camera and an infrared projector.

3. The multi-computer vision recognition system as claimed in claim 1, wherein the position determination system comprises a computation mechanism and an image recognition mechanism.

4. The multi-computer vision recognition system as claimed in claim 3, wherein the image recognition mechanism adopts a correction matrix mechanism, capable of computing for the position of the obstacle and corresponding to a correct position of the overall vision recognition system to promote an obstacle recognition accuracy.

5. The multi-computer vision recognition system as claimed in claim 1, wherein the obstacle determination resolution system is further connected to an output mechanism, which outputs an output signal to an emergency button originally belonging to the level crossing.

6. The multi-computer vision recognition system as claimed in claim 1, wherein the output mechanism comprises a loudspeaker and a display screen.

Fig. 1

Fig. 2

Fig. 3

**EP 2 803 552 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 455553

**10**